**Europäisches Patentamt**

**European Patent Office**

**Office européen des brevets**

(19)

(11) Veröffentlichungsnummer: **0 148 286**
**B1**

(12) **EUROPÄISCHE PATENTSCHRIFT**

(45) Veröffentlichungstag der Patentschrift:
**19.11.87**

(51) Int. Cl.⁴: **F 16 L 23/00**

(21) Anmeldenummer: **83113251.9**

(22) Anmeldetag: **30.12.83**

(54) **Flanschverbindung.**

(43) Veröffentlichungstag der Anmeldung:
**17.07.85 Patentblatt 85/29**

(45) Bekanntmachung des Hinweises auf die Patenterteilung:
**19.11.87 Patentblatt 87/47**

(84) Benannte Vertragsstaaten:
**AT CH DE FR GB IT LI**

(56) Entgegenhaltungen:
**EP - A - 0 092 110**
**DE - A - 1 650 169**
**DE - C - 90 469**

(73) Patentinhaber: **Geldner, Siegfried, Grobergerstrasse 3,**
**D-8201 Neubeuern (DE)**

(72) Erfinder: **Geldner, Siegfried, Grobergerstrasse 3,**
**D-8201 Neubeuern (DE)**

(74) Vertreter: **Flach, Dieter Rolf Paul, Dipl.-Phys. et al,**
**Patentanwälte Andrae/Flach/Haug/Kneissl**
**Prinzregentenstrasse 24, D-8200 Rosenheim (DE)**

## Beschreibung

Die Erfindung betrifft eine Flanschverbindung zum gegenseitigen Befestigen von im Querschnitt im wesentlichen rechteckigen Kanalteilstücken, insbesondere für lufttechnische Hochdruckanlagen nach dem Oberbegriff des Anspruches 1.

Derartige Flanschverbindungen dienen insbesondere zum Zusammenbau und Verankern von Kanalteilstücken für Luftschächte. Die Kanalteilstücke bestehen dabei in der Regel aus rechteckig gekantetem Blech. Zur Dämpfung des Körperschalles, der durch die Klimaanlage in einem Geräteprofilkopf verursacht wird, werden zwischen den aneinander angeflanschten Kanalteilstücken ferner zumindest ein Dämpfungsglied eingebaut, das aus einer elastischen Verbindung in Art eines rechteckförmigen Balges besteht.

Eine gattungsgemässe Flanschverbindung ist beispielsweise aus der DE-PS 2 313 425 bekannt geworden und umfasst an den Enden der Kanalteilstücke rahmenartig zu befestigende Winkelprofile, die jeweils zur Kanalseitenwand einen senkrecht und einen parallel verlaufenden Flansch aufweisen. Die Flansche dienen auch zur Verankerung jeweils eines rechtwinkeligen Montagewinkels, über den zwei rechtwinkelig zueinander stehende Winkelprofile miteinander verbunden werden. Die Winkelprofile und der Montagewinkel werden dann gemeinsam auf die Kanalteilstücke aufgesetzt, wobei an den parallel und beim Zusammenbau in Anlage befindlichen Flanschen noch eine dazwischen angeordnete Dichtung eingebaut sein kann, die zum Abdichten des in dem Luftkanal bestehenden erhöhten Druckes dient.

Diese vorbekannten Winkelprofile sind aber aufwendig gefertigt und umfassen, da sie im wesentlichen doppelwandig ausgebildet sind, im Prinzip vier Wände. Bedenkt man aber, dass derartige der Stabilisierung der Kanalteilstücke dienende Winkelprofile in der Regel aus Stahl bestehen, so ist leicht ersichtlich, dass dadurch ein enorm hoher Materialaufwand mit ganz erheblichen Materialkosten bedingt ist.

Da aber die Kanalseitenwände eines Kanalteilstückes selbst nicht formbeständig sind, sind gleichwohl, nicht nur zur Flanschverbindung, derartige Winkelprofile zur Stabilisierung und Formgebung der Kanalteilstücke notwendig, so dass im Sinne einer Materialersparnis die Einsparung von Winkelprofilen praktisch nicht möglich ist.

Darüber hinaus weisen die zum Verbinden der Winkelprofile notwendigen Montagewinkel an zwei senkrecht zueinander stehenden Seiten Steckschenkel zum steckbaren Befestigen an den senkrecht aufeinander und zu den Seitenwänden der Kanalteilstücke stehenden Flansche der Winkelprofile auf. Mit diesen im wesentlichen aus Flacheisen gestanzten und geformten Montagewinkeln lässt sich aber an den Eckpunkten zweier benachbarter Kanalteilstücke nicht die gewünschte vollständige Abdichtung erzielen. Deshalb muss in der Praxis häufig mit elastomeren Werkstoffen an den Ecken eine vollständige nachträgliche Abdichtung vorgenommen werden.

Nachteilig ist ferner, dass die Flanschverbindung für eine elastische Verbindung in Form eines Balges als Dämpferelement anders ausgeführt sein muss, als die Flanschverbindung zur Befestigung von aus Blechteilen bestehenden Kanalteilstücken, wobei bei Verwendung eines elastischen Balges hier die Dichtungsprobleme ebenso auftreten. Schliesslich und endlich ist es in der Regel üblich, bei grösseren Anlagen mit Kanalteilstücken grösseren Querschnitts Profile mit einem Querflansch in grösserer Breite zu verwenden, als bei kleineren Anlagen mit kleinerem Querschnitt, wo in der Regel die Winkelprofile einen Querflansch mit geringerer Breite aufweisen. Dies erfordert in nachteiliger Weise die Herstellung mehrerer unterschiedlich dimensionierter Winkelprofile, wodurch ebenfalls wieder die Herstellungskosten erhöht werden.

Demgegenüber ist es Aufgabe der vorliegenden Erfindung eine gattungsgemässe Flanschverbindung derart auszubilden, dass bei gleichzeitig bewirkter Materialersparnis für die Winkelprofile eine gegenüber dem Stand der Technik zumindest gleichgute Biegestabilität der Flanschverbindung und der Winkelprofile im besonderen erzielt wird, wobei die Flanschverbindung sowohl zum Stabilisieren und Verbinden von aus Blechteilen als auch aus einem elastischen Balg als Dämpfer bestehenden Kanalteilstücken geeignet sein sollen, ohne dass dadurch die Dichtwirkung gegenüber dem Stand der Technik verschlechtert wird.

Durch die erfindungsgemässe Flanschverbindung mit dem völlig neuartig gestalteten Winkelprofil wird erstmals auf einfache Art und Weise eine maximale Steifigkeit und Biegebeanspruchung bei minimalem Materialaufwand ermöglicht. Dies ergibt sich im wesentlichen durch die an den beiden Aussenkanten der Winkelprofile vorgesehenen Bördelränder und der ferner an der Längskante zwischen Quer- und Parallelflansch von aussen her eingebrachten Sicke. Dadurch werden auf engstem Raum maximale Biegekanten vorgesehen, die im wesentlichen zu der erhöhten Trakgraft beitragen. Bedenkt man, dass die erfindungsgemässen Winkelprofile gegenüber den vorbekannten Profilen etwa eine Materialersparnis von über 30% ermöglichen, so wird hierdurch die deutliche Kostensenkung insbesondere bei Verwendung von Winkelprofilen aus Stahl ersichtlich.

Die erhöhte Biegesteifigkeit wird in einer vorteilhaften Ausgestaltung nach Anspruch 2 ferner dadurch verbessert, dass der Bördelrand rohrförmig oder halbrohrförmig ausgebildet ist, wobei in einer Weiterbildung nach Anspruch 3 ferner vorgesehen ist, dass auch die Sicke symmetrisch zur Winkelhalbierenden ebenfalls rohrförmig eingebracht ist. Durch diese im Querschnitt rohrförmige Ausgestaltung können maximale Kräfte durch die Winkelprofile aufgenommen werden.

Die Steifigkeit der Flanschverbindung wird aber auch besonders durch die erfindungsgemässe Ausgestaltung des völlig neuartigen Montagewinkels weiter verbessert, der nicht mehr im wesentlichen aus quasi zweidimensional aus Flacheisen ausgestanzt oder geformt wird, sondern der Steckschenkel nicht nur für die Querflansche, sondern auch für die Parallelflansche aufweist. Dabei lässt sich dieser neuartige Montagewinkel wie auch die neu gestalteten Winkelprofile sowohl zum Verbinden und Stützen von aus Blech wie aber auch aus elastischem Balg bestehenden Kanalseitenwänden verwenden.

Eine besonders günstige Ausgestaltung der Erfindung nach Anspruch 6 ergibt sich dann, wenn in dem Montagewinkel parallel zur Ebene der Stirnseite eines Kanalteilstückes eine abgewinkelt verlaufende Aufnahmevertiefung vorgesehen ist, in die im zusammengebauten Zustand die Stirnkanten eines Kanalteilstückes aufgesetzt werden können.

Um ferner auch die Dichtwirkung auf einfache Art und Weise zu erhöhen, ist in einer besonders bevorzugten Ausführungsform der Erfindung nach Anspruch 7 vorgesehen, dass an jedem Winkelprofil im Übergangsbereich von einem Flansch zu dem dazu senkrecht abgewinkelten zweiten Flansch eine Sicke zur Aufnahme einer Dichtlippe vorgesehen ist, wobei es sich in einer Weiterbildung nach Anspruch 8 als günstig erwiesen hat, in Verlängerung der genannten Sicke auch am Montagewinkel eine Ringnut vorzusehen, so dass sich in diesem Fall bei der jeweils rahmenartig zusammengesetzten Flanschverbindung in der Sicke und in der Ringnut im Montagewinkel eine einstückig umlaufende Dichtlippe anbringen lässt.

Ansprüche 11 und 12 betreffen die Ausbildung der Klemmeinichtung zum Festhalten und Verankern eines steifen, beispielsweise aus Blech bestehenden Kanalteilstückes, wohingegen die Ansprüche 13 bis 15 sich auf die Ausbildung der Klemmeinrichtung für den Fall betreffen, dass ein elastischer Balg an der erfindungsgemässen Flanschverbindung dicht angebracht werden soll.

In einer bevorzugten Ausführungsform nach Anspruch 14 sind dabei ferner die Profilstücke zur Winkelhalbierenden symmetrisch ausgebildet, wodurch sich zahlreiche Vorteile bei der Herstellung und beim Einbau als Flanschverbindung zusätzlich ergeben, wobei in einer Weiterbildung nach Anspruch 15 die Breite der Flansche unterschiedlich sein kann. Werden nämlich Winkelprofile beispielsweise mit zwei unterschiedlichen Flanschbreiten benötigt, so braucht deswegen gleichwohl nur ein Winkelprofilstück hergestellt zu werden, dessen beide Flansche mit der gewünschten unterschiedlichen Breite ausgebildet sind.

Um eine hohe Biegesteifigkeit bei maximaler Dichtwirkung sicher zu gewährleisten, ist in einer vorteilhaften Ausgestaltung der Erfindung nach Anspruch 18 vorgesehen, dass der Montagewinkel als Formgussteil, vorzugsweise aus Kunststoff gefertigt ist und in einer Weiterbildung nach Anspruch 19, dass der Montagewinkel aus glasfaserverstärktem Kunststoff besteht.

Weitere Vorteile, Einzelheiten und Merkmale der Erfindung ergeben sich nachfolgend an den anhand von Zeichnungen dargestellten Ausführungsbeispielen der Erfindung. Dabei zeigen im einzelnen:

Fig. 1 eine perspektivische Detailansicht eines Kanalteilstückes mit bereits aufgesetzten Winkelprofilen;

Fig. 2 eine Draufsicht auf einen erfindungsgemässen Montagewinkel;

Fig. 3 eine Schnittansicht gemäss der Linie III-III in Fig. 2;

Fig. 4 eine Schnittansicht längs der Linie II-II in Fig. 2;

Fig. 5 eine Schnittansicht längs der Linie V-V in Fig. 2;

Fig. 6 eine Stirnansicht eines Winkelprofils im aufgesetzten Zustand auf eine Kanalseitenwand mit zugehöriger Klemmeinrichtung;

Fig. 7 bis 9 drei Ausführungsbeispiele einer Klemmeinrichtung für die Winkelprofile in Querschnittsdarstellung.

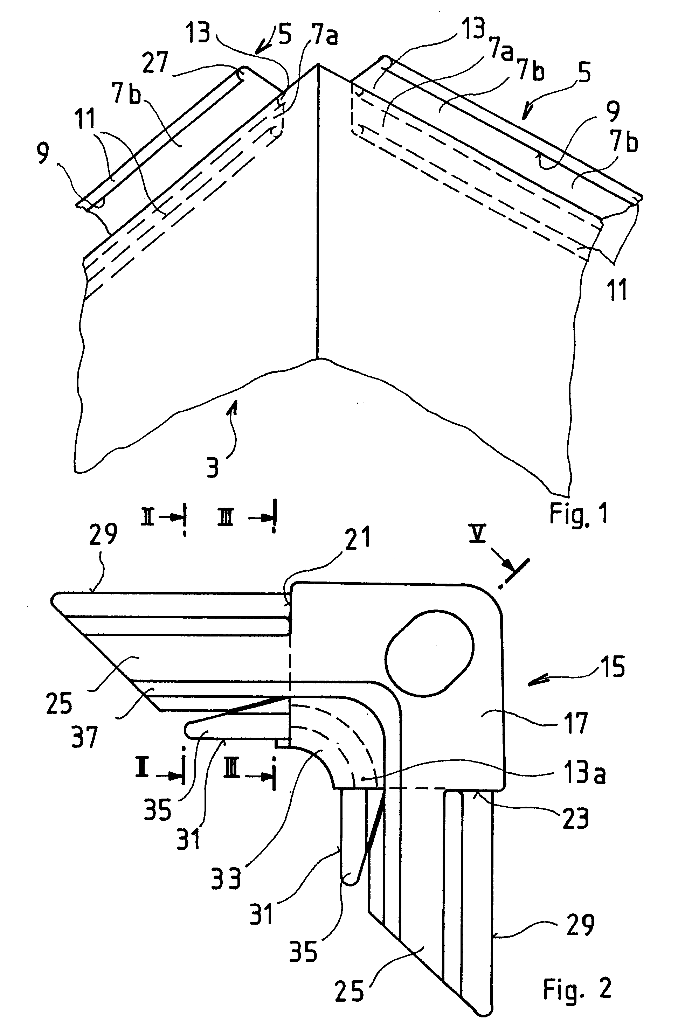

In Fig. 1 sind in perspektivischer Darstellung die beiden vorderen Kanalseitenwände 1 eines Kanalstückes 3 gezeigt, das im wesentlichen aus Blech gekantet ist. Worauf später noch eingegangen wird, kann das Kanalteilstück 3 aber auch aus elastomerem Werkstoff, beispielsweise in Form eines Balges bestehen. Diese Materialien werden dann als Art eines Dämpfers in einen durchgängigen Luftkanal eingebaut, um die Körperschallwellen einer Klimaanlage durch den so gebildeten Luftkanal nicht weiterzuleiten.

Das ausschnittsweise gezeigte Kanalteilstück ist in Fig. 1 bereits auf zwei entsprechende Winkelprofile aufgesetzt, die jeweils aus zwei rechtwinkelig zueinander stehenden Flanschen 7, nämlich jeweils einem parallel zu einer Kanalseitenwand 1 verlaufenden Parallelflansch 7a und einem senkrecht dazu verlaufenden Querflansch 7b.

Im zusammengebauten Zustand werden dann mehrere Kanalteilstücke stirnseitig über die Querflansche 7b aneinander befestigt.

Wie sich aus Fig. 1 ferner schematisch ergibt, sind die Flansche 7 an ihrer Aussenkante 9 mit jeweils einem aufeinanderzu weisenden Bördelrand 11 versehen. Im Übergangsbereich zwischen den beiden senkrecht aufeinander stehenden Flanschen 7a und 7b ist symmetrisch zur Winkelhalbierenden eine nach innen weisende Sicke 13 vorgesehen, auf deren Bedeutung noch später eingegangen wird.

Im folgenden wird nun auf die Fig. 2 bis 5 eingegangen, in denen in verschiedenen Darstellungen ein Montagewinkel gezeigt ist, der in Fig. 1 in der dort gezeigten Darstellung nur zwischen den beiden rechtwinklig zueinander ausgerichteten Winkelprofilen 5 eingesetzt werden müsste.

Der Montagewinkel 15 weist einen Kernwinkelbereich 17 auf, dessen Unterseite 19 im eingebauten Zustand in Fig. 1 mit der nach oben weisenden Ebene der Querflansche 7b fluchtet.

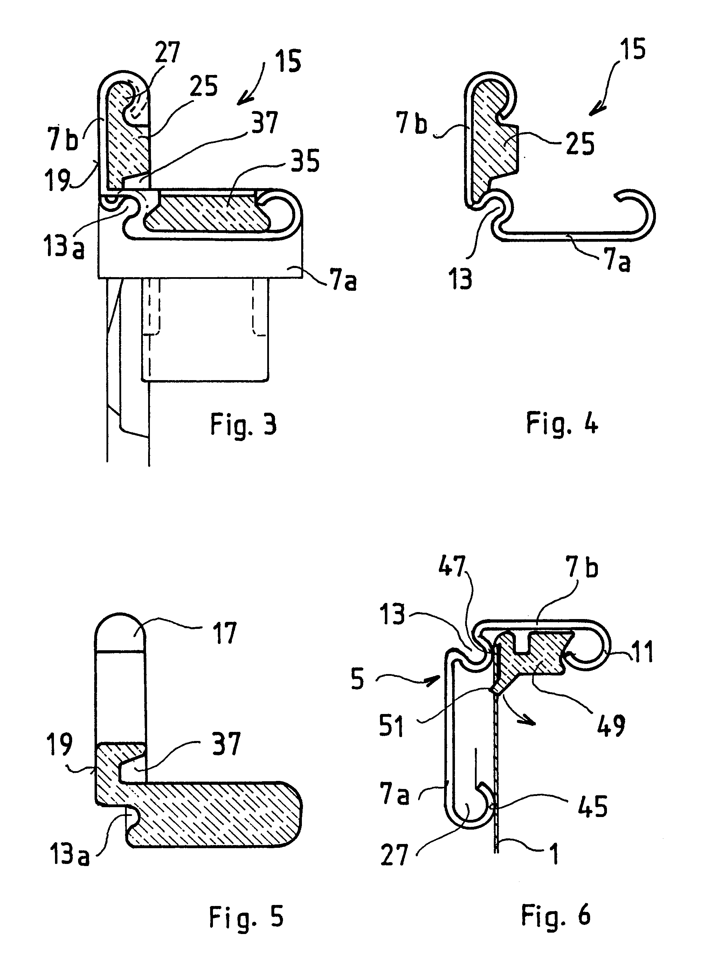

An zwei rechtwinkelig zueinander liegenden Seiten 21 und 23 am Kernwinkelbereich 17 ragen jeweils Steckschenkel 25 vor, die an den Querflanschen 7b, und zwar dort insbesondere an dem durch den Bördelrand 11 gebildeten Halbraum 27 einsteckbar und verankerbar sind. Wie dazu aus den Fig. 3 und 4 ersichtlich ist, ist dazu der Aussenrand 29 der beiden Steckschenkel 25 entsprechend an die Form des Bördelrandes 11 angepasst, damit sich ein guter formschlüssiger Sitz ergibt.

Aber auch der Innenrand 31 eines jeden Steckschenkels 25 ist an die Form der Aussenwandung der zwischen den beiden Flanschen 7 eingebrachten und nach innen weisenden Sicke 13 angepasst, so dass ein fester formschlüssiger Sitz des Montagewinkels 15 an dem zugehörigen Winkelprofil sichergestellt ist.

Jeder Montagewinkel weist aber ferner noch eine innenliegende Vertikalsäule 33 auf, von der ebenfalls in Draufsicht in Fig. 2 parallel zu den beiden Steckschenkeln 25 weitere Steckschenkel 35 herrvorragen, die in den entsprechenden Parallelflanschen 7a einsteckbar und formschlüssig verankerbar sind.

Wie aus Fig. 2 ferner noch zu ersehen ist, ist im Montagewinkel 15 noch eine abgewinkelt verlaufende Aufnahmevertiefung oder Sicke 37 eingebracht. Im zusammengebauten Zustand wird dabei der Montagewinkel 15 in Fig. 1 so weit auf die stirnseitigen Kanten des Kanalteilstückes 3 aufgesetzt, dass diese stirnseitigen Kanten in der gezeigten Aufnahmevertiefung 37 zur Anlage kommen. Die Vertikalsäule 33 liegt dabei gemeinsam mit den Parallelflanschen 7a im inneren des Kanalteilstückes 3, wobei die Querflansche 7b, der Kernwinkelbereich 17 und die in dessen Ebene angrenzenden Steckschenkel 25 über die Kanalseitenwände 1 hinausragen.

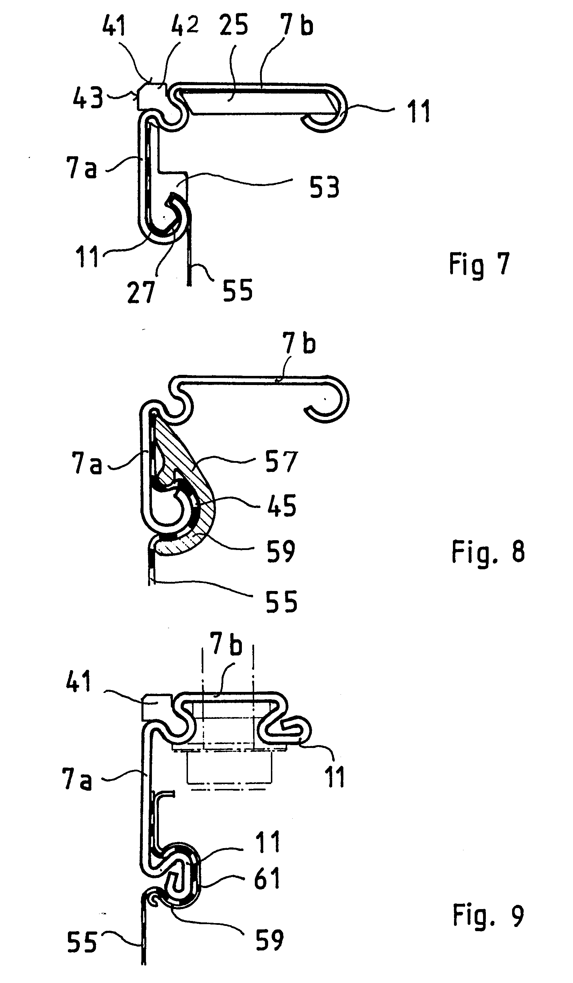

Wie sich aus den Fig. 2 bis 4, aber auch aus den Fig. 7 bis 9 ergibt, ist in dem Montagewinkel 15 eine innenliegende Rundsicke 13a vorgesehen, die im eingebauten Zustand des Montagewinkels in unmittelbarer Verlängerung der Sicke 13 an den Winkelprofilen 15 zu liegen kommt. Die erwähnte Sicke 13 und die Rundsicke 13a dienen zur Verankerung einer umlaufenden Dichtlippe 42, wie sie insbesondere auch in den Fig. 7 bis 9 ersichtlich ist. Die Sicke 13 ist dabei symmetrisch zur Winkelhalbierenden zwischen den beiden senkrecht aufeinander liegenden Flanschen 7a und 7b ausgerichtet, wobei die eingesetzte Dichtlippe im wesentlichen zwei ebene Dichtflächen 41 und 43 aufweist, die im wesentlichen mit den angrenzenden Flanschflächen fluchtet.

Im zusammengebauten Zustand liegt somit also eine völlig umlaufende Dichtlippe an der entsprechenden Dichtlippe der angrenzenden Flanschverbindung des nächsten Kanalteilstückes 3 an, so dass eine völlig umlaufende und sehr wirksame Abdichtung des Kanalinnenraumes nach aussen geschaffen wird.

Nachfolgend wird nunmehr noch auf die Verankerung der Winkelprofile 6 an den Kanalseitenwänden 1 eingegangen. Wie sich dazu aus Fig. 6 ergibt, wird ein zugeordnetes Winkelprofil 5 auf eine Kanalseitenwand 1 jeweils so aufgesetzt, dass die jeweilige Kanalseitenwand 1 in Parallelausrichtung zum anliegenden Flansch 7a am Bördelaussenrand 45 und am Sickenaussenrand 47, die also jeweils die gleiche Höhe bezüglich des zugeordneten Parallelflansches 7a aufweisen, anliegt. Ferner umfasst die Klemmeinrichtung eine aus elastomerem Werkstoff bestehende Klemmleiste 49, die dann am zugeordneten Querflansch 7b in voller Breite der Kanalseitenwand 1 oder aber auch in mehreren separaten Abschnitten zwischen dem dortigen Bördelrand 11 und der Sickenaussenwand 47 eingeklemmt wird. Um die Vorspannkraft der zugeordneten Kanalseitenwand 1 in Richtung auf den Parallelflansch 7a noch zu erhöhen, kann die Klemmleiste 49 mit einem in Ruhelage schräg vorstehenden elastischen Drucknippel 51 versehen sein. In der Fig. 6 ist der Drucknippel 51 in seiner Ruhelage bei nicht eingesetzter Wand gezeigt.

In den Fig. 7 bis 9 ist die Verankerung eines Kanalteilstückes 3 gezeigt, das nicht aus kantbarem Blech, sondern aus elastomerem Werkstoff, beispielsweise in Form eines elastischen Balges besteht.

Derartige Elemente werden als Dämpfer verwendet.

Die Klemmeinrichtung besteht hier in Fig. 7 aus einem vorzugsweise elastischen Haltekeil 53, der in dem entsprechenden durch den Bördelrand 11 gebildeten Halbraum 27 und der gegenüberliegenden Sicke 13 verspannt wird. Die elastische Wand 55 des nicht näher gezeigten Balges wird dabei um die Sickenaussenwand 47 herum in den Halbraum 27 hinein und in Anlage auf der rückwärtigen Seite am Parallelflansch 7a festgehalten.

Fig. 8 zeigt einen abgewandelten Klemmkeil 57 mit einem den Bördelaussenrand 45 umgreifenden Finger 59. Dadurch wird ermöglicht, dass die elastische Wand 55 fluchtend zum Parallelflansch 7a ausgerichtet wird.

Fig. 9 zeigt eine weitere Abwandlung, bei der der Bördelrand noch eine Gegenabwicklung aufweist. Die Befestigung der elastischen Wand 55 erfolgt dabei über eine diesen Bördelrand nach Art eines Schnappverschlusses umgreifenden Halteklammer 61.

Aus der vorstehend erfolgten Beschreibung ist also ersichtlich, dass mit den gezeigten Winkelprofilen und dem Montagewinkel sowohl die Befestigung von starren Kanalseitenwänden 1 als auch entsprechend ausgebildeten elastischen Wänden erfolgan kann. Dabei braucht der Montagewinkel im zuletzt genannten Fall eine entsprechende Aufnahmevertiefung zur ruhenden Aufnahme der stirnseitigen Kanten der Kanalteilstücke 3 nicht aufzuweisen. Zur Vereinfachung ist aber im Prinzip eine gleiche Ausgestaltung für beide Varianten vorzuziehen.

Wie aus den Zeichnungen ferner hervorgeht, sind die Winkelprofile 5 im wesentlichen symmetrisch zur Winkelhalbierenden ausgebildet. Dadurch werden fertigungstechnische Vorteile und aufgrund der relativ einfachen Ausgestaltung auch Materialeinsparungen erzielt. Da aber die Parallel-Querflansche 7a und 7b auch in unterschiedlicher Breite bei ansonst spiegelbildlichem Bördelrand 11 ausgebildet sein können, wird dadurch der Vorteil realisiert, dass allein durch Vertauschen des Parallellflansches mit dem Querflansch zwei unterschiedliche Flanschbreiten zur Befestigung an einem benachbarten Kanalteilstück zur Verfügung stehen. Dies führt noch zu einer zusätzlichen bei optimaler Dichtwirkung zu einem vergrösserten Einsatzbereich der beschriebenen Flanschverbindung.

Abschliessend wird noch darauf hingewiesen, dass die Winkelprofile 5 jeweils vor der Längskante einer Kanalseitenwand bereits enden, wie sich insbesondere aus Fig. 1 ergibt. Die gegenüber dem Stand der Technik erhöhte Biegesteifigkeit aufgrund der beiden Biegekanten durch die beiden Bördelränder und insbesondere auch noch durch die drei Biegekanten durch die von aussen her eingebrachte Sicke an jedem Winkelprofil wird im wesentlichen aber bereits auch schon dann ermöglicht, wenn die Winkelprofile mit einem nach dem Stand der Technik bekannten ebenen, quasi zweidimensionalen Montagewinkel miteinander verbunden werden. Ebenso denkbar ist auch, dass die Winkelprofile über Gehrungsschnitte rahmenartig zusammengesetzt werden. Durch den Montagewinkel 15 mit seiner dreidimensionalen Ausgestaltung wird aber die Steifigkeit der Flanschverbindung noch weiter erhöht, wobei sich ferner hierdurch eine optimalere Dichtwirkung erzielen lässt.

In der Zeichnung sind ferner an den Montagewin-keln 15 noch Langlöcher 63 gezeigt, die der vereinfachten Verbindung mehrerer Kanalteilstücke mit den dort befestigten Winkelprofilen dient, so dass der Zusammenbau einer Anlage insgesamt leicht ohne Spezialwerkzeuge vorgenommen werden kann. Statt einer Schraubverbindung im Bereich der Langlöcher 63 ist es aber auch möglich, über zwei aneinanderliegende Querflansche 7b eine übergreifende Klemmleiste aufzusetzen.

Ferner wird noch angemerkt, dass die Winkelprofi-le und der Montagewinkel auch dazu benutzt werden können, einzelne Seitenwände rahmenartig abzustützen oder eine elastische Wand dazwischen aufgespannt zu halten.

## Patentansprüche

1. Flanschverbindung zum gegenseitigen Befestigen von im Querschnitt im wesentlichen rechteckigen Kanalteilstücken (3), insbesondere für lufttechnische Hochdruckanlagen, bestehend aus an den Enden der Kanalteilstücke (3) rahmenartig zu befestigenden Winkelprofilen (5) mit zur jeweiligen Kanalseitenwand (1) parallel und senkrecht verlaufenden Parallel- bzw. Querflanschen (7a; 7b) zum Aufsetzen der Enden der Kanalteilstücke (3) und Montagewinkeln (15), die jeweils zwei senkrecht zueinander stehende Steckschenkel (25) zur steckbaren Befestigung an den senkrecht zueinander stehenden Winkelprofilen (5) aufweisen, dadurch gekennzeichnet, dass die Parallelflansche (7a) und die Querflansche (7b) an ihrer Aussenkante (9) jeweils einen aufeinander zu weisenden Bördelrand (11) aufweisen, in jedem Winkelprofil (5) im Übergangsbereich vom Parallelflansch (7a) zum Querflansch (7b) eine von der Winkelaussenseite aus eingebrachte Sicke (13) vorgesehen ist und Klemmeinrichtungen (49; 53; 57; 61) vorhanden sind, die mindestens zum Teil innerhalb des Parallelflansches oder Querflansches angeordnet sind, wobei die Befestigung der Kanalteilstücke (3) über eine sich jeweils am Bördelrand (11) abstützende Klemmeinrichtung erfolgt.

2. Flanschverbindung nach Anspruch 1, dadurch gekennzeichnet, dass der Bördelrand (11) rohrförmig oder halbrohrförmig ausgebildet ist.

3. Flanschverbindung nach Anspruch 1 oder 2, dadurch gekennzeichnet, dass die Sicke (13) rohrförmig und symmetrisch zur Winkelhalbierenden zwischen dem Parallelflansch (7a) und dem Querflansch (7b) ausgebildet ist.

4. Flanschverbindung nach Anspruch 1, 2 oder 3, wobei die Steckschenkel (25) des Montagewinkels (15) an zwei benachbart und senkrecht aufeinander stehenden Querflanschen (7b) eingesteckt sind, dadurch gekennzeichnet, dass der Montagewinkel (15) zwischen den Stirnseiten der zugeordneten Winkelprofile (5) ferner eine senkrecht zu den Steckschenkeln (25) stehende Vertikalsäule (33) aufweist, von der jeweils zwei weitere rechtwinkelig zueinander stehende Steckschenkel (35) ausgehen, die in den jeweiligen Parallelflansch (7a) der zugeordneten Winkelprofile (5) einsteckbar sind.

5. Flanschverbindung nach einem der Ansprüche 1 bis 4, wobei die Winkelprofile (5) stirnseitig an den Kanalteilstücken (3) so aufgesetzt sind, dass die Parallelflansche (7a) der Winkelprofile (5) im Inneren der Kanalteilstücke (3) zu liegen kommen, dadurch gekennzeichnet, dass die Vertikalsäule (33) des eingebauten Montagewinkels (15) ebenfalls innen im Kanalteilstück (3) zu liegen kommt.

6. Flanschverbindung nach einem der Ansprüche 1 bis 5, dadurch gekennzeichnet, dass der Montagewinkel (15) eine um den Fuss der Vertikalsäule (33) heraumlaufende Aufnahmevertiefung (37) zur Auflage der Eckstirnkante eines Kanalteilstückes (3) aufweist.

7. Flanschverbindung nach einem der Ansprüche 1 bis 6, mit einer Dichtung zum Abdichten zweier im Dichtungsfall aneinander liegender Querflansche (7b), dadurch gekennzeichnet, dass an jedem Winkelprofil (5) in der dort eingebrachten Sicke (13) eine Dichtlippe (42) eingesteckt ist.

8. Flanschverbindung nach einem der Ansprüche 1 bis 7, dadurch gekennzeichnet, dass auch im Montagewinkel (15) eine Rundsicke (13a) eingebracht ist, über die eine Sicke (13) in einem Winkelprofil (5) mit der entsprechend angrenzenden Sicke (13) des nächsten Winkelprofils (5) unmittelbar verbunden ist, und dass in der Sicke (13) und der Rundsicke (13a) eine umlaufende Dichtlippe (42) eingesetzt ist.

9. Flanschverbindung nach einem der Ansprüche 1 bis 8, dadurch gekennzeichnet, dass die Dichtlippe (42) im wesentlichen zwei Dichtebenen aufweist, die mit den Aussenflächen der Parallelflansche (7a) und den Querflanschen (7b) fluchten.

10. Flanschverbindung nach einem der Ansprüche 1 bis 9, dadurch gekennzeichnet, dass das Aussenmass der Sicke (13) und des Bördelrandes (11), bezogen auf einen gemeinsamen Flansch (7a, 7b) gleich ist.

11. Flanschverbindung nach einem der Ansprüche 1 bis 10, dadurch gekennzeichnet, dass zur Verankerung eines steifen Kanalteilstückes (3) die Klemmeinrichtung eine Klemmleiste (49) oder Klemmleistenabschnitte umfasst, die sich an den Bördelrand (11) des zugeordneten Querflansches (7b) abstützt, und dass die jeweilige Kanalseitenwand (1) an der Sickenaussenwand (47) und dem Bördelaussenrand (45) des Parallelflansches (7a) anliegend vorgespannt hält.

12. Flanschverbindung nach einem der Ansprüche 1 bis 11, dadurch gekennzeichnet, dass die Klemmleiste (49) oder die Klemmleistenabschnitte einen in Richtung auf die zugeordnete Kanalseitenwand (1) vorgespannten, elastischen Drucknippel (51) umfasst.

13. Flanschverbindung nach einem der Ansprüche 1 bis 10, dadurch gekennzeichnet, dass die Klemmeinrichtung zur Befestigung eines aus elastomerem Werkstoff bestehenden Kanalteilstückes (3) aus einem sich an der Sicke (13) und den zugeordneten Bördelrand (11) abstützenden und das elastische Tuch des Kanalteilstückes (3) in den Halbraum des Bördelrandes (11) hineindrückenden Haltekeil (53; 57) besteht.

14. Flanschverbindung nach einem der Ansprüche 1 bis 10, dadurch gekennzeichnet, dass die Klemmeinrichtung in Form einer Halteklammer (61) ausgebildet ist, die auf den Bördelrand (11) in Form eines Schnappverschlusses den Bördelrand (11) umfassend aufsetzbar ist und die darunter aus elastischem Tuch angeklemmte Kanalseitenwand (1) hält.

15. Flanschverbindung nach Anspruch 13 oder 14, dadurch gekennzeichnet, dass die Klemmeinrichtung (57; 61) einen den Bördelrand (11) umgreifenden Finger (49) aufweist, durch den die elastische Kanalseitenwand (1) in fluchtender Lage mit dem Parallelflansch (7a) gehalten wird.

16. Flanschverbindung nach einem der Ansprüche 1 bis 14, dadurch gekennzeichnet, dass die Winkelprofile (5) einschliesslich der darin eingebrachten Sicke (13) zur Winkelhalbierenden symmetrisch ausgebildet sind.

17. Flanschverbindung nach Anspruch 16, dadurch gekennzeichnet, dass bei an sich bestehender Winkelsymmetrie die Flanschbreite der Winkelprofile (5) unterschiedlich ausgebildet ist.

18. Flanschverbindung nach einem der Ansprüche 1 bis 17, dadurch gekennzeichnet, dass der Montagewinkel (15) als Formgussteil, vorzugsweise aus Kunststoff gefertigt ist.

19. Flanschverbindung nach einem der Ansprüche 1 bis 18, dadurch gekennzeichnet, dass der Montagewinkel (15) aus glasfaserverstärktem Kunststoff besteht.

## Claims

1. Flange joint for the mutual fixing of duct components (3) having a basically rectangular cross-section, in particular for air high-pressure installations, consisting of angle sections (5) to be mounted in a framework-like manner to the ends of the duct components (3) with parallel, respectively cross flanges (7a; 7b) running parallel and perpendicular to the respective duct sidewall (1) for anchoring the mounting angles that can be fixed to the flanges (7a; 7b), and for attaching the ends of the duct components (3) whereas the mounting angle (15) shows plug-legs (25) on two sides being perpendicular to one another for the plug-mounting to the flanges (7a; 7b) being perpendicular to one another, marked by the fact that the parallel flanges (7a) and the cross flanges (7b) show a flanging edge (11) respectively directed towards one another on their outer edge (9), and moreover by the fact that each angle section (5) provides a bead (13) introduced from the outside angle in the transitional area from the parallel flange (7a) to the cross flange (7b), whereas the fixing of the duct components (3) is effected by a clamping device (49; 53; 61) respectively resting upon the flanging edge (11).

2. Flange joint according to claim 1, marked by the fact that the flanging edge (11) is designed in a tubular or semi-tubular form.

3. Flange joint according to claim 1 or 3, marked by the fact that the bead (13) is designed in a tubular form and in summetry with the bisector of the angle between the parallel flange (7a) and the cross flange (7b).

4. Flange joint according to claim 1, 2 or 3, whereas the plug-legs (25) of the mounting angle (15) are plugged into two adjoining cross flanges (7b) perpendicular on one another, marked by the fact that the mounting angle (15) in addition shows a vertical column (33) standing perpendicular to the plus-legs (25) in the area between the faces of the allocated angle sections (5), from which there are starting respectively two further plug-legs (35) standing perpendicular to one another, that can be plugged into the respective parallel flange (7a) of the allocated angle sections (5).

5. Flange joint according to one of the claims 1 to 4, whereas the angle sections (5) with their faces to the duct components (3) in a way that the parallel flange (7a) of the angle sections (5) are placed on the inside of the duct components (3), marked by the fact that the vertical column (33) of the integrated mounting angle (15) is also placed on the inside of the duct component (3).

6. Flange joint according to one of the claims 1 to 5, marked by the fact that the mounting angle (15) shows a receiving indentation running around the bottom of the vertical column (33) for resting the corner front edge of a duct component (3).

7. Flange joint according to one of the claims 1 to 6 with a seal for the purpose of sealing two cross flanges (7b) adjoining in the case of sealing, marked by the fact that a lip seal (49) is plugged in on every angle section (5) in the bead introduced in this place.

8. Flange joint according to one of the claims 1 to 7, marked by the fact that a circular bead (13a) is also introduced into the mounting angle (15) directly linking a bead (13) in an angle section (5) to the correspondingly adjoining bead (13) of the following angle section (5), and by the fact that a circulating lip seal (49) is inserted in the bead (13) and in the circular bead (13a).

9. Flange joint according to one of the claims 1 to 8, marked by the fact that the lip seal (49) basically shows two sealing surfaces that are in alignment with the outside areas of the parallel flanges (7a) and the cross flanges (7b).

10. Flange joint according to one of the claims 1 to 9, marked by the fact that the outer dimensions of the bead (13) and of the flanging edge (11) are the same with reference to a common flange (7a, 7b).

11. Flange joint according to one of the claims 1 to 10, marked by the fact that the clamping device provides a clamping strip (49) or clamping strip sections for the purpose of anchoring a rigid duct component (3), resting upon the flanging edge (11) of the allocated cross flange (7b), thus previously keeping prestressed the respective duct sidewall (1) on the bead outer wall (47) and the outer flanging edge (45) of the parallel flange (7a).

12. Flange joint according to one of the claims 1 to 11, marked by the fact that the clamping strip (49) of the clamping strip sections provide a resilient pressure nipple (51) prestressed towards the direction of the allocated duct sidewall (1).

13. Flange joint according to one of the claims 1 to 10, marked by the fact that the clamping device for the fixing of a duct component (3) made of elastomere material consists of a retaining wedge key (53) resting upon the bead (13) and the allocated flanging edge (11) and pressing the elastic tissue of th duct component (3) into the half-space of the flanging edge (11).

14. Flange joint according to one of the claims 1 to 10, marked by the fact that the clamping device is designed in form of a retaining bracket (61) that can be completely attached to the flanging edge (11) in form of a spring catch, retaining the duct sidewall (1) beneath the elastic tissue.

15. Flange joint according to claim 13 or 14, marked by the fact that the clamping device (53; 61) shows a finger clasping the flanging edge (11), that keeps the elastic duct sidewall (1) in alignment with th parallel flange (7a).

16. Flange joint according to one of the claims 1 to 14, marked by the fact that the angle sections (5) including the beads (13) introduced are designed in symmetry with the bisector of the angle.

17. Flange joint according to claim 16, marked by the fact that the flange width of the angle sections (5) is designed differently, with an angular symmetriy actually existing.

18. Flange joint according to one of the claims 1 to 17, marked by the fact that the mounting angle (15) is manufactured as die casting preferably made of plastic.

19. Flange joint according to one of the claims 1 to 18, marked by the fact that the mounting angle (15) consists of glass-fibre reinforced plastic.


**Revendications**

1. Joint à brides pour la fixation réciproque des pièces de conduite (3) ayant une section transversale essentiellement rectangulaire, particulièrement pour les installations d'haute pression d'air, composé de profilés en angle (5) qui peuvent être fixé aux bouts des pièces de conduite (3) dans une manière d'encadrement, avec des brides parallèles, respectivement transversales (7a; 7b) s'étirant parallèlement et verticale à la paroi latérale (1) respective, pour l'encrage des cornières de montage qui peuvent être fixé aux brides (7a; 7b) et pour ajouter les bouts des pièces de conduite (3) la cornière de montage (15) y présentant des ailes d'assemblage (25) à deux côtés perpendiculaires pour la fixation d'assemblage à la bride (7a; 7b) etant d'aplomb, caractérisé par le fait que les brides parallèles (7a) et les brides transversales (7b) présentent un collet rabattu (11) respectivement montrant l'un vers l'autre à leurs bords extérieures (9) et qu'en outre en chaque profilé en angle (5) une moulure (13) est prévue, introduit par la façe externe de la cornière, dans la zone transitoire entre la bride parallèle (7a) et la bride transversale (7b), la fixation des pièces de conduite (3) étant effectué par un dispositif de serrage (49; 53; 61) s'étayant respectivement au collet rabattu (11).

2. Joint à brides selon revendication 1, caractérisé par le fait que le collet rabattu (11) est modelé en forme tubulaire ou semi-tubulaire.

3. Joint à brides selon revendication 1 ou 2, caractérisé par le fait que la moulure (13) est modelé en forme tubulaire et en symmétrie avec la bissectrice entre la bride parallèle (7a) et la bride transversale (7b).

4. Joint à brides selon revendications 1, 2 ou 3, les ailes d'assemblage (25) de la cornière de montage (15) étant enfoncé à deux transversales (7b) avoisinantes et perpendiculaires l'un sur l'autre, caractérisé par le fait que la cornière de montage (15) en outre montre une colonne verticale (33) perpendiculaire aux ailes d'assemblage (25) entre les fronts des profilés en angle (5) attribués, de laquelle respectivement partent deux autres ailes d'assemblage (35) etant perpendiculaire l'un sur l'autre qui peuvent être enfoncé dans la bride parallèle respective (7a) des profilés en angle (5) attribués.

5. Joint à brides selon une des revendications 1 à 4, les profilés en angle (5) étant ajoutés au front des pièces de conduite (3) dans une manière que les brides parallèles (7a) des profilés en angle (5) sont placés à l'intérieur des pièces de conduite (3), caractérisé par le fait que la colonne verticale (33) de la cornière de montage (15) integré est aussi placé à l'intérieur dans la pièce de conduite (3).

6. Joint à brides selon une des revendications 1 à 5, caractérisé par le fait que la cornière de montage (15) montre un renfoncement de réception (37) contournant le pied de la colonne verticale (33) pour l'appui du bord d'angle de face d'une pièce de conduite (3).

7. Joint à brides selon une des revendications 1 à 6 avec un joint étanche pour rendre étanche les deux brides transversales (7b) avoisinant dans le cas d'étanchéité, caractérisé par le fait qu'un joint à lèvre (49) est enfoncé à chaque profilé en angle (5) à la moulure (13) y introduite.

8. Joint à brides selon une des revendications 1 à 7, caractérisé par le fait qu'une moulure circulaire (13a) est aussi introduite à la cornière de montage (15) raccordant immédiatement une moulure (13) d'un profilé en angle (5) respectivement à une moulure (13) avoisinante du profilé en angle (5) prochain, et qu'un joint à lèvre (49) contournant est ajouté dans la moulure (13) et la moulure circulaire (13a).

9. Joint à brides selon une des revendications 1 à 8, caractérisé par le fait que le joint à lèvre (49) essentiellement montre deux surfaces étanches étant en alignement avec les surfaces extérieures des brides parallèles (7a) et les brides transversales (7b).

10. Joint à brides selon une des revendications 1 à 9, caractérisé par le fait que les mesures extérieures de la moulure (13) et du collet rabattu (11) sont les mêmes en rapport avec une bride (7a, 7b) commune.

11. Joint à brides selon une des revendications 1 à 10, caractérisé par le fait que le dispositif de serrage contient un listel de serrage (49) ou des sections de listel de serrage pour l'encrage d'une pièce de conduite (3) rigide, qui s'appuie sur le collet rabattu (11) de la bride transversale (7b) attribuée et qui met sous précontrainte la paroi latérale de pièce de conduite (1) respective à la paroi extérieure de la moulure (47) et le collet rabattu extérieure (45) de la bride parallèle (7a).

12. Joint à brides selon une des revendications 1 à 11, caractérisé par le fait que le listel de serrage (49) ou les sections de listel de serrage contiennent un raccord fileté (51) élastique à pression sous précontrainte en direction à la paroi latérale de conduite (1) attribuée.

13. Joint à brides selon une des revendications 1 à 10, caractérisé par le fait que le dispositif de serrage pour la fixation d'une section de pièce de conduite (3) de matériel élastomère consiste d'une clavette d'arret (53) s'appuyant sur la moulure (13) et le collet rabattu (11) attribué et pressant la tissue élastique de la section de pièce de conduite (3) dans l'espace semi-infini du collet rabattu (11).

14. Joint à brides selon une des revendications 1 à 10, caractérisé par le fait que le dispositif de serrage est developpé en forme d'une agrafe de retenue (61) qui peut être ajouté sur le collet rabattu (11) en forme d'un couvercle de houssette contournant le collet rabattu (11) et qui au-dessous retient la paroi latérale de conduite (1) de tissue élastique agrafé.

15. Joint à brides selon revendication 13 ou 14, caractérisé par le fait que le dispositif de serrage (53) montre un doigt (59) contournant le collet rabattu (11) qui retient la paroi latérale de conduite (1) élastique en alignement avec la bride parallèle (7a).

16. Joint à brides selon une des revendications 1 à 14, caractérisé par le fait que les profilés en angle (5) y compris la moulure (13) y introduite sont developpés en symmétrie avec la bissectrice.

17. Joint à brides selon revendication 17, caractérisé par le fait que la largueur de bride des profilés en angle (5) sont developpés différemment avec une symmétrie angulaire existant.

18. Joint à brides selon une des revendications 1 à 17, caractérisé par le fait que la cornière de montage (15) est fabriqué comme pièce de moulage de préférence de matière plastique.

19. Joint à brides selon une des revendications 1 à 18, caractérisé par le fait que la cornière de montage (15) consiste de matière plastique renforcé de fibres de verre.

Fig. 1

Fig. 2

Fig. 3

Fig. 4

Fig. 5

Fig. 6

Fig 7

Fig. 8

Fig. 9